# EUROPÄISCHE PATENTSCHRIFT

(11) **EP 0 622 968 B1**
(45) Veröffentlichungstag und Bekanntmachung des Hinweises auf die Patenterteilung: **03.09.2003**
(21) Anmeldenummer: 94103067.8
(22) Anmeldetag: 01.03.1994
(51) Int. Cl.: H04Q 11/04, H04Q 3/62, H04M 11/06

(54) **ISDN-Kommunikationssystem**
ISDN communications system
Système de communication RNIS

(30) Priorität: 26.03.1993 DE 4309847
(43) Veröffentlichungstag der Anmeldung: 02.11.1994
(73) Patentinhaber: SIEMENS AKTIENGESELLSCHAFT, 80333 München (DE)
(72) Erfinder: Brune, Georg, Dr., D-58675 Hemer (DE)

(56) Entgegenhaltungen:
- EP-A- 0 320 890
- GIRAULT R: "SMALL ANALOGUE AND DIGITAL PABXS AND KEY SYSTEMS" ELECTRICAL COMMUNICATION, Bd. 63, Nr. 1, Juni 1989, ESSEX, GB, Seiten 25-31, XP000030424
- VOLLMER A: "DIE SIEMENS-ISDN-CHIPFAMILIE" NACHRICHTENTECHNIK ELEKTRONIK, Bd. 40, Nr. 12, 1990, BERLIN, DE, Seiten 463-466, XP000207633
- WILLEMSTEIN R A S: "THE SOPHO-S ISDN INTERFACE FOR A COMBINATION OF PROPRIETARY AND STANDARD TERMINALS" PHILIPS TELECOMMUNICATION REVIEW, Bd. 50, Nr. 2, August 1992, Seiten 37-48, XP000315525

## Beschreibung

Kleine Kommunikationssysteme, insbesondere Nebenstellenanlagen mit weniger als 15 anschließbaren Kommunikationsendgeräten bzw. Anschlüssen an ein öffentliches Netz, insbesondere Fernsprechnetz, sind derzeit überwiegend für den Anschluß von analogen Kommunikationsendgeräten bzw. analogen Anschlüssen von öffentlichen Netzen - d.h. die Sprachsignale werden analog übertragen - konzipiert. Ein derartiges Konzept für eine Nebenstellenanlage, jedoch für 15 bis 50 Anschlüsse für Kommunikationsendgeräte bzw. für öffentliche Netze, ist aus der Philips Communication Review, Soho-S15/25/35, "The architecture of a small digital communication switch", Vol. 49, Nr. 1, March 1991, bekannt. Dort wird eine Konfiguration vorgeschlagen, die auf analogen Basisanschlüssen als "Amts-Anschlüsse" zum öffentlichen Fernsprechnetz basiert und die Erweiterungen für digitale Kommunikationsendgeräte über die standardisierten S₀-Schnittstellen vorsieht. Des weiteren sind Anschlüsse zum Betreiben und Warten des Kommunikationssystems vorgesehen. Diese Konzeption basiert auf einer Konzeption für Kommunikationssysteme mit mehr als 50 Anschlüssen für Kommunikationsendgeräte bzw. öffentliche Netze und ist daher für sehr kleine Kommunikationssysteme, insbesondere kleiner 15 Anschlüsse, sowohl hinsichtlich Konstruktion als auch schaltungstechnischer und programmtechnischer Ausführung zu aufwendig, d.h. unwirtschaftlich.

Aus der Druckschrift "Small analogue and digital PABXs and Key Systems", von R. Girault, Electrical Communication, Bd. 63, Nr. 1, Juni 1989, Seiten 25 - 31 ist ein kleines Kommunikationssystem für bis zu 16 Anschlüssen bekannt, bei dem eine Zentraleinheit über einen internen Bus mit unterschiedlichsten peripheren Modulen für den Anschluß von ISDN-Terminals, analogen Telefonen oder Verbindungsleitungen und ISDN-Endgeräten und ISDN-Netzanschlußeinrichtungen verbunden werden kann. Die schaltungstechnisch und konstruktiv unterschiedlichen Module können je nach Bedarf in das Kommunikationssystem eingesetzt werden, wobei das Kommunikationssystem für einen maximalen Ausbau schaltungstechnisch und konstruktiv ausgestaltet ist.

Der Erfindung liegt daher die Aufgabe zugrunde, ein ISDN-fähiges kleines Kommunikationssystem unter Berücksichtigung einer besonders kostengünstigen Realisierung auszugestalten. Die Aufgabe wird durch die Merkmale des Anspruchs 1 gelöst.

Der wesentliche Aspekt des erfindungsgemäßen Kommunikationssystems ist darin zu sehen, daß durch die Aufteilung in eine Übertragungseinheit, eine Peripheriesteuerung, ISDN-Basisanschlußeinheiten, eine Ergänzungseinheit und ein Mikroprozessorsystems eine besonders wirtschaftliche Realisierung eines kleinen digitalen ISDN-Kommunikationssystems ermöglicht wird, insbesondere unter der Berücksichtigung einer Integration der einzelnen Komponenten in integrierte Telekommunikationsbausteine bzw. Telekommunikationsschaltkreise oder anwenderspezifizierbare integrierte Schaltkreise - Anspruch 6. Der schaltungstechnische und der damit verbundene konstruktive Aufwand wird insbesondere durch die den Anschluß von acht ISDN-Kommunikationsendgeräten ermöglichende Übertragungseinheit und die die acht Kommunikationsendgeräte vermittelnde und die Signalisierungskanäle steuernde Peripheriesteuerung erreicht. Ein weiterer wesentlicher Vorteil des erfindungsgemäßen ISDN-Kommunikationssystems ist darin zu sehen, daß die in der ISDN-Basisanschlußeinheit vorgesehene ISDN-Basisschnittstelle, d.h. die ISDN-S₀-Schnittstelle, im Kommunikationssystem- oder Kommunikationsendgerätemodus betrieben werden kann - Anspruch 5. Dies bedeutet, daß diese ISDN-Basisanschlußschnittstelle - d.h. S₀-Schnittstelle - sowohl für den Anschluß von ISDN-Kommunikationsendgeräten mit einer S₀-Schnittstelle als auch für den ISDN-Anschluß eines Kommunikationsnetzes, insbesondere eines öffentlichen Kommunikationsnetzes, vorgesehen ist. Durch diese Maßnahme wird eine hohe Flexibilität hinsichtlich des Einsatzes der ISDN-Basisanschlußschnittstellen erreicht, wodurch das kleine ISDN-Kommunikationssystem für unterschiedlichste Anwendungen geeignet ist.

Gemäß einer vorteilhaften Ausgestaltung des erfindungsgemäßen Kommunikationssystems ist die Peripheriesteuerung mit einer weiteren internen, ISDN-orientierten Systembusschnittstelle ausgestattet, an die optional eine vier analoge Fernsprechanschlüsse realisierende Erweiterungsanschlußeinheit anschließbar ist, wofür diese mit einer ISDN-orientierten, internen Systembusschnittstelle versehen ist - Anspruch 2. Durch diese Erweiterungsmöglichkeit sind insbesondere die Informationssignale analog übermittelnde Facsimile-Kommunikationsendgeräte an das kleine ISDN-Kommunikationssystem anschließbar. Die analogen Fernsprechanschlüsse sind auch mit weiteren Kommunikationsendgeräten, wie Anrufbeantwortern, Türfreisprecheinrichtungen, Fernsprechern usw., verbindbar.

In der Peripheriesteuerung ist eine Signalisierungskanalsteuerung, eine Vermittlungseinheit und eine Mikroprozessoreinheit vorgesehen - Anspruch 3. Die Vermittlungseinheit stellt ein im Zeitlagenvielfach wirkendes Koppelfeld für die Vermittlung von bis zu 64 à 64 KB/s-Nachrichtenkanälen dar, wobei der Vermittlungseinheit die zu übermittelnden Nachrichtenkanäle über eine interne, ISDN-orientierte Systembusschnittstelle zugeführt werden. Diese Systembusschnittstelle weist beispielsweise 32 gemultiplexte bidirektionale 64 KB/s-Nachrichtenkanäle auf, in die die zu übermittelnden Informationen in PCM-codierter Form eingefügt sind.

Mit Hilfe der Signalisierungskanalsteuerung werden die Signalisierungskanäle über die Übertragungseinheit zu den Kommunikationsendgeräten gesteuert, d.h. die Signalisierungsinformationen in die entsprechenden Signalisierungskanäle eingefügt oder die ankommenden Signalisierungsinformationen gelesen und über die Mikroprozessorschnittstelle im Sinne einer Signalisierungsinformation-Bewertung und -bearbeitung an die Mikroprozessoreinheit weitergeleitet.

Gemäß einer weiteren vorteilhaften Ausgestaltung des erfindungsgemäßen ISDN-Kommunikationssystems ist die Übertragungseinheit derart ausgestaltet, daß acht ISDN-orientierte, nach dem Zeitgetrenntlage-Übertragungsverfahren wirkende ISDN-Kommunikationsendgeräte anschließbar sind - Anspruch 4. Die angegebene Anzahl von acht anschließbaren ISDN-Kommunikationsendgeräten stellt hinsichtlich einer besonders wirtschaftlichen Realisierung einer Übertragungseinheit in einem integrierten Telekommunikationsschaltkreis und der an ein kleines digitales ISDN-Kommunikationssystem anschließbaren Kommunikationsendgeraten eine besonders wirtschaftlich zu realisierende Anzahl dar.

Im folgenden wird ein erfindungsgemäßes kleines ISDN-Kommunikationssystem anhand eines Blockschaltbildes näher erläutert.

Das Blockschaltbild zeigt ein Kommunikationssystem KS, das durch eine Übertragungseinheit OCTAT, eine Vermittlungseinheit ELIC, vier ISDN-Basisanschlußeinheiten ISAC1...4 und durch ein Mikroprozessorsystem MS gebildet ist. In der Übertragungseinheit OCTAT sind acht Übertragungsschaltungen UP1...UP8 vorgesehen. Durch jede dieser Übertragungsschaltungen UP1...UP8 ist eine nach dem Zeitgetrenntlage-Übertragungsverfahren wirkende Up-Schnittstelle Up1...Up8 realisiert. Jede dieser Schnittstellen Up1...Up8 ist für den Anschluß eines mit einer gleichartig realisierten Up-Schnittstelle Up ausgestatteten ISDN-Kommunikationsendgerätes KE-Up vorgesehen. Hierzu ist in jedem der ISDN-Kommunikationsendgeräte KE-Up eine gleichartig zu der in der Übertragungseinheit OCTAT realisierten Übertragungsschaltung UP angeordnet. Folglich sind an das Kommunikationssytem acht ISDN-Kommunikationsendgeräte KE-Up mit einer Up-Schnittstelle Up anschließbar. Mit Hilfe zusätzlicher separater oder im Kommunikationsendgerät KE realisierter Einrichtungen - nicht dargestellt - sind 16 Kommunikationsendgeräte KE mit jeweils einem Nachrichtenkanal anschließbar. Bei dieser Up-Schnittstelle Up,Up1...Up8, Up wird die bidirektionale Informationsübermittlung durch Informationsbursts mit einer Übertragungsgeschwindigkeit von 384 KB/s bewirkt. Die Informationsübermittlung umfaßt zwei Nachrichtenkanäle - die bei ISDN-Verbindungen mit B-Kanäle bezeichnet sind - sowie einen Signalisierungskanal - D-Kanal - und zusätzliche Informationen für eine Rahmensynchronisation, für zusätzliche Dienstkanäle und einem weiteren transparenten Kanal - z.B. für eine Paketübermittlung. Die Signalisierungsprozedur ist entsprechend der bei CCITT (Comiteé Consultatif International de Telegraphique et Telephonique) standardisierten Verfahren für ISDN-Netze (Integrated Services Digital Networks) realisiert. Die empfangenen bzw. die zu sendenden Nachrichten- und Signalisierungsinformationen werden mit Hilfe einer in der Übertragungseinheit OCTAT angeordneten Multiplex-/Demultiplexeinrichtung MD zu einem Informationsstrom von 2,048 KB/s zusammengefaßt und an eine ISDN-orientierte interne Systembusschnittstelle IOMB gesteuert. Diese Systembusschnittstelle IOMB ist an eine erste gleichartig realisierte interne, ISDN-orientierte Systembusschnittstelle IOMB1 der Peripheriesteuerung ELIC geschaltet. Die Systembusschnittstelle IOMB1 ist in der Peripheriesteuerung ELIC in einer D-Kanal-, d.h. Signalisierungskanalsteuerung DA, realisiert, mit deren Hilfe die Zuteilung bzw. das Sperren der Signalisierungskanäle bzw. D-Kanäle über die Anschlußleitungen ASL zu den ISDN-Kommunikationsendgeräten KE-U_{P} bewirkt wird. In der Signalisierungskanalsteuerung DA ist eine gleichartig zur ersten eine zweite ISDN-orientierte, interne Systembusschnittstelle IOMB2 realisiert. Diese zweite Systembusschnittstelle IOMB2 ist parallel mit vier ISDN-Basisanschlußeinheiten ISAC1...4 verbunden, wofür je ISDN-Basisanschlußeinheit ISAC1...4 mit einer Systembusschnittstelle IOMB ausgestattet ist. In jeder der ISDN-Basisanschlußeinheiten ISAC1...4 ist des weiteren eine in den CCITT-Empfehlungen standardisierte S₀-Schnittstelle S₀ für ISDN-Basisanschlüsse realisiert. Diese S₀-Schnittstelle S₀ ist - beispielsweise durch Schaltelemente in einem Kommunikationssystem- bzw. ISDN-Kommunikationsnetzmodus steuerbar. Dies bedeutet, daß an diese S₀-Schnittstelle S₀ sowohl jeweils eine S₀-Schnittstelle aufweisende Kommunikationsendgerate KE-S als auch jeweils ein ISDN-Anschluß eines öffentlichen Kommunikationsnetzes ISDN-PSTN (Public Switch Telephone Network) anschließbar ist. Im Ausführungsbeispiel sei angenommen, daß zwei ISDN-Kommunikationsendgeräte KE-S und zwei ISDN-Anschlüsse eines öffentlichen Kommunikationsnetzes ISDN-PSTN an die vier S₀-Schnittstellen S₀ des Kommunikationssystems KS angeschlossen sind. Eine andere Anschlußvariante ist durch einfache Modusumsteuerung der ISDN-Basisanschlußeinheiten ISAC1...4 in Abhängigkeit von der Anzahl der gewünschten ISDN-Anschlüsse eines öffentlichen Kommunikationsnetzes ISDN-PSTN oder einer gewünschten Anzahl von Kommunikationsendgeräten KE-S jederzeit möglich. Die ISDN-Basisanschlußeinheiten ISAC1...4 sind beispielsweise besonders vorteilhaft jeweils durch einen integrierten Telekommunikationsschaltkreis PEB2085 (ISDN Subscriber Access Controller) realisierbar-siehe Siemens Databook "IC's FOR TELECOMMUNICATION", 1989.

In der Signalisierungskanalsteuerung bzw. D-Kanalsteuerung DA ist für den optionalen Anschluß einer Erweiterungsanschlußeinheit EAE gleichartig zur ersten eine dritte Systembusschnittstelle IOMB3 realisiert. Diese dritte Systembusschnittstelle IOMB3 ist mit der ebenfalls eine Systembusschnittstelle IOMB aufweisenden Erweiterungsanschlußeinheit EAE verbunden. In dieser Erweiterungsanschlußeinheit EAE sind vier a/b-Schnittstellen a/b für den Anschluß von vier analogen Kommunikationsendgeräten realisiert. Diese Erweiterungsanschlußeinheit EAE ist insbesondere für den Anschluß von analogen Facsimile-Endgeräten FAX vorgesehen. Mit Hilfe der in der Erweiterungsanschlußeinheit EAE angeordneten Anschlußeinheiten AE1...4 werden die bekannten analogen Signalisierungs- und Nachrichtenübertragungsverfahren realisiert. Die digitalisierten analogen Informationssignale werden mit Hilfe einer Multiplexeinrichtung M zusammengefaßt und an die Systembusschnittstelle IOMB geführt. Analog hierzu werden die von der Systembusschnittstelle IOMB übermittelten Nachrichten- bzw. Signalisierungsinformationen aufgeteilt, d.h. demultiplext, und an die Anschlußeinheiten AE1...4 weitergeleitet. Die Erweiterungsanschlußeinheit EAE ist vorteilhaft durch integrierte Telekommunikationsschaltkreise, z.B. PEB2465 (Sicofi4) der Firma Siemens, realisiert.

Die drei Systembusschnittstellen IOMB1...3 werden durch die Signalisierungskanalsteuerung DA geführt und mit einer Vermittlungseinheit EPIC verbunden. In dieser Vermittlungseinheit EPIC ist ein zeitschlitzgesteuertes Koppelfeld mit 2048 KB/s-Eingängen implementiert. Mit Hilfe dieses Koppelfeldes sind 64 Nachrichtenkanäle à 64 KB/s vermittelbar. Dies bedeutet, daß mit Hilfe dieses Koppelfeldes 32 ISDN-Kommunikationsendgeräte KE vermittelbar sind. Die Vermittlungseinheit EPIC weist des weiteren einen bidirektional ausgestalteten 2048 KB/s-Anschluß PCM auf, der mit einem gleichartig realisierten 2048 KB/s-Anschluß PCM einer Ergänzungseinheit ASIC verbunden ist. In der Vermittlungseinheit EPIC ist eine Signalisierungssteuerung SIS vorgesehen, mit deren Hilfe die in den Signalisierungskanälen bzw. D-Kanälen enthaltenen bzw. einzufügenden Signalisierungsinformationen - z.B. in Kanal 31 des 32 x 64 KB/s-Kanäle umfassenden, gemulitplexten Bitstromes - gelesen bzw. eingefügt und an eine Mikroprozessoreinheit MPE geleitet bzw. von dieser übernommen werden. In der Ergänzungseinheit ASIC ist neben einer Echtzeituhr ein Taktgenerator und eine Synchronisationseinrichtung für eine Synchronisation auf einen vom öffentlichen Kommunikationsnetz ISDN-PSTN übermittelten Netztakt realisiert. Für die Übermittlung von Hör- bzw. Musiktönen an die Kommunikationsendgeräte KE sind in der Ergänzungseinheit ASIC des weiteren entsprechende Tongeneratoren vorgesehen. Für einen Informationsaustausch mit dem Mikroprozessorsystem MS ist eine Mikroprozessoreinheit MPE in der Ergänzungseinheit ASIC implementiert.

Das Mikroprozessorsystem MS ist durch einen Mikroprozessor MP und einen diesem zugeordneten Lese- und einen Schreib-Lese-Speicher ROM, RAM gebildet. Im Lesespeicher ROM sind insbesondere die die vermittlungstechnischen Funktionen und die Komponenten des Kommunikationssystems KS koordinierenden Programme gespeichert. Im Schreib-Lese-Speicher RAM ist der Arbeitsspeicher des Mikroprozessors MP und ein Speicherbereich für die verbindungsindividuelle Speicherung von Verbindungsinformationen vorgesehen. Sowohl die interne Verbindung zwischen dem Mikroprozessor MP und dem Lese- und dem Schreib-Lese-Speicher ROM, RAM als auch die Verbindung mit den Mikroprozessoreinheiten MPE der Ergänzungseinheit ASIC, der Peripheriesteuerung ELIC und der ISDN-Basisanschlußeinheiten ISAC1...4 wird mit Hilfe eines lokalen Bussystems LB bewirkt. Das lokale Bussystem LB ist durch die bekannten Daten-, Adreß- und Steuerleitungen - nicht dargestellt - gebildet. Der Mikroprozessor ist beispielsweise durch den Mikroprozessor 80166 der Firma Siemens realisierbar.

An das vorgehend beschriebene Kommunikationssystem KS sind insgesamt acht Kommunikationsendgeräte KE-U_{P} mit einer Up-Schnittstelle Up und zusätzlich vier S₀-Schnittstellen S₀ für ISDN-Kommunikationsnetze angeordnet, an die sowohl ISDN-Kommunikationsendgeräte KE-S mit einer S0-Schnittstelle S₀ als auch ISDN-Anschlüsse eines öffentlichen Kommunikationsnetzes ISDN-PSTN anschließbar sind. Optional sind durch Hinzufügen einer Erweiterungsanschlußeinheit EAE, die beispielsweise auf einer separaten Schaltungsplatine realisiert und in eine Grundplatine einsteckbar ist, analoge Kommunikationsendgeräte, insbesondere Facsimile-Endgeräte FAX, anschließbar. Der entsprechende Modus wird hierbei mit Hilfe beispielsweise von Schaltelementen auf der Erweiterungsanschlußeinheit EAE eingestellt. Durch die vorhergehend beschriebene, erfindungsgemäße Struktur lediglich mit einer Übertragungseinheit OCTAT, einer Vermittlungseinheit ELIC, eines Mikroprozessorsystems MS, einer Ergänzungseinheit ASIC und von vier ISDN-Basisanschlußeinheiten ISAC1...4 ist eine besonders wirtschaftliche, d.h. kostengünstige Realisierung eines kleinen Kommunikationssystems KS unter Berücksichtigung einer erheblichen Integration dieser Komponenten in integrierte Schaltkreise möglich, wobei eine einfache Umstellung auf unterschiedliche Beschaltung der S₀- und a/b-Schnittstellen S₀, a/b möglich ist.

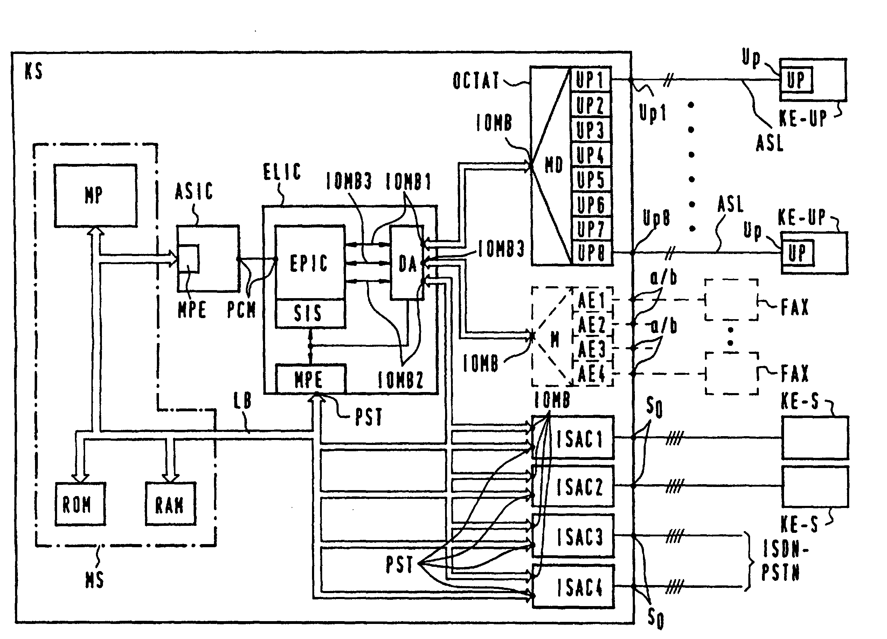

## Patentansprüche

1. ISDN-Kommunikationssystem (KS)
- mit einer Übertragungseinheit (OCTAT), die
· mehrere jeweils nach dem Zeitgetrenntlage-Übertragungsverfahren wirkende, für den Anschluß von ISDN-Kommunikationsendgeräten (KE-Up) vorgesehene Übertragungsschnittstellen (Up)
· und eine kommunikationssysteminterne, ISDN-orientierte Systembusschnittstelle (IOMB) aufweist, über die Nachrichtenund Signalisierungsinformationen für die angeschlossenen Kommunikationsendgeräte (KE-Up) zu einem seriellen Informationsstrom zusammengefaßt übermittelt werden,
- mit einer die Vermittlung der angeschlossenen Kommunikationsendgeräte (KE)bewirkende und die Signalisierungskanäle koordinierende Peripheriesteuerung (ELIC),
· die zumindest zwei kommunikationssysteminterne, ISDN-orientierte Systembusschnittstellen (IOMB1,2),
· eine Mikroprozessorschnittstelle (PST) und
· eine PCM-orientierte Busschnittstelle (PCM) aufweist, wobei die erste Systembusschnittstelle (IOMB1) mit der Systembusschnittstelle (IOMB) der Übertragungseinheit (OCTAT) verbunden ist,
- mit maximal vier jeweils mit einem ISDN-Kommunikationsendgerät (KE-S) oder einem ISDN-Anschluß eines Kommunikationsnetzes (ISDN-PSTN) verbindbaren ISDN-Basisanschlußeinheiten (ISAC),
· die jeweils eine im Kommunikationsendgeräte- oder im Kommunikationssystemmodus wirkende ISDN-Basisanschlußschnittstelle (S₀),
· eine Mikroprozessorschnittstelle (PST) und
· eine interne, ISDN-orientierte Systembusschnittstelle (IOMB) aufweisen, wobei die Systembusschnittstellen (IOMB) der ISDN-Basisanschlußeinheiten (ISAC) parallel an die zweite Systembusschnittstelle (IOMB2) der Peripheriesteuerung (ELIC) geführt sind,
- mit einer zur Takt- und Tonbildung bzw. -steuerung und Leistungsmerkmalsteuerung vorgesehenen Ergänzungseinheit (ASIC), die eine mit der PCM-orientierten Schnittstelle (PCM) der Peripheriesteuerung (ELIC) verbundene PCM-orientierte, eine Busschnittstelle (PCM) und eine Mikroprozessorschnittstelle (PST) aufweist, und
- mit einem die Vermittlung, Signalisierung und Leistungsmerkmale des ISDN-Kommunikationssystems (KS) steuernde bzw. koordinierende Mikroprozessorsystem (MS),
· in dem ein das Mikroprozessorsystem (MS) repräsentierende Mikroprozessor (MP) sowie ein Lese- und ein Schreib-Lese-Speicher (ROM, RAM) an ein durch Adreß-, Daten- und Steuerleitungen gebildetes lokales Bussystem (LB) angeschlossen sind und das lokale Bussystem (LB) parallel mit den Prozessorschnittstellen (PST) der Ergänzungs- und der ISDN-Basisanschlußeinheiten (ASIC, ISAC) sowie der Peripheriesteuerung (ELIC) verbunden ist.

2. ISDN-Kommunikationssystem nach Anspruch 1,
**dadurch gekennzeichnet,**
**daß** die Peripheriesteuerung (ELIC) eine dritte interne, ISDN-orientierte Systembusschnittstelle (IOMB3) aufweist, an die optional eine vier analoge Fernsprechanschlüsse (a/b) realisierende Erweiterungsanschlußeinheit (EAE) anschließbar ist, wofür diese mit einer ISDN-orientierten, internen Systembusschnittstelle (IOMB) ausgestattet ist.

3. ISDN-Kommunikationssystem nach Anspruch 1 oder 2,
**dadurch gekennzeichnet,**
**daß** die Peripheriesteuerung (ELIC) durch
- eine die internen, ISDN-orientierten Systembusschnittstellen (IOMB1...3) realisierende und eine die Signalisierungskanäle steuernde Signalisierungskanalsteuerung (DA),
- eine die Nachrichtenkanäle der angeschlossenen ISDN-Kommunikationsendgeräte (KE) vermittelnde, und zumindest eine PCM-orientierte Busschnittstelle (PCM) realisierende Vermittlungseinheit (EPIC) und
- eine die Signalisierungsinformationen seriell übermittelnde, die Mikroprozessorschnittstelle (PST) realisierende Mikroprozessoreinheit (MPE) gebildet ist.

4. ISDN-Kommunikationssystem nach einem der vorhergehenden Ansprüche,
**dadurch gekennzeichnet,**
**daß** die Übertragungseinheit (OCTAT) derart ausgestaltet ist, daß acht ISDN-orientierte, nach dem Zeitgetrenntlage-Übertragungsverfahren wirkende ISDN-Kommunikationsendgeräte (KE-Up) anschließbar sind.

5. ISDN-Kommunikationssystem nach einem der vorhergehenden Ansprüche,
**dadurch gekennzeichnet,**
**daß** die ISDN-Basisanschlußeinheiten (ISAC1...4) derart ausgestaltet sind, daß ISDN-Kommunikationsendgeräte (KE-S) oder ISDN-Anschlüsse von Kommunikationsnetzen (ISDN-PSTN) mit einer standardisierten S₀-Schnittstelle (S₀) anschließbar sind.

6. ISDN-Kommunikationssystem nach einem der vorhergehenden Ansprüche,
**dadurch gekennzeichnet,**
**daß** die Übertragungseinheit (OCTAT), die Peripheriesteuerung (ELIC), die ISDN-Basisanschlußeinheiten (ISAC1...4) sowie die Erweiterungsanschlußeinheit (EAE) durch integrierte Telekommunikationsschaltkreise und die Ergänzungseinheit (ASIC) durch einen anwenderspezifizierbaren integrierten Schaltkreis realisiert sind.

## Claims

1. ISDN communication system (KS)
- having a transmission unit (OCTAT) which has
• a plurality of transmission interfaces (Up) which each act on the basis of the time-division multiplex transmission method and are provided for connecting ISDN communication terminals (KE-Up),
• and a communication-system-internal, ISDN-oriented system bus interface (IOMB) which is used to transmit message and signalling information for the connected communication terminals (KE-Up) in a form combined into a serial information stream,
- having a peripheral controller (ELIC) which switches the connected communication terminals (KE) and coordinates the signalling channels,
• which has at least two communication-system-internal, ISDN-oriented system bus interfaces (IOMB1,2),
• a microprocessor interface (PST), and
• a PCM-oriented bus interface (PCM), with the first system bus interface (IOMB1) being connected to the system bus interface (IOMB) in the transmission unit (OCTAT),
- having a maximum of four ISDN basic access units (ISAC) which can each be connected to an ISDN communication terminal (KE-S) or to an ISDN line in a communication network (ISDN-PSTN),
• which each have an ISDN basic access interface (S₀) which acts in communication-terminal mode or in communication-system mode,
• a microprocessor interface (PST), and
• an internal, ISDN-oriented system bus interface (IOMB), with the system bus interfaces (IOMB) in the (ISDN) basic access units (ISAC) being routed in parallel to the second system bus interface (IOMB2) in the peripheral controller (ELIC),
- having an extension unit (ASIC) which is provided for clock and tone formation or control and service-feature control and has a PCM-oriented [lacuna] connected to the PCM-oriented interface (PCM) in the peripheral controller (ELIC), a bus interface (PCM) and a microprocessor interface (PSTN), and
- having a microprocessor system (MS) which controls or coordinates the switching, signalling and service features in the ISDN communication system (KS),
• and in which a microprocessor (MP) representing the microprocessor system (MS) and also a read-only memory and a read/write memory (ROM, RAM) are connected to a local bus system (LB) formed by address, data and control lines, and the local bus system (LB) is connected in parallel with the processor interfaces (PST) in the extension and ISDN basic access units (ASIC, ISAC) and also the peripheral controller (ELIC).

2. ISDN communication system according to Claim 1,
**characterized**
**in that** the peripheral controller (ELIC) has a third internal, ISDN-oriented system bus interface (IOMB3) to which an extension access unit (EAE) providing four analogue telephone lines (a/b) can optionally be connected, for which purpose it is equipped with an ISDN-oriented, internal system bus interface (IOMB).

3. ISDN communication system according to Claim 1 or 2,
**characterized**
**in that** the peripheral controller (ELIC) is formed by
- a signalling channel controller (DA) which provides the internal, ISDN-oriented system bus interfaces (IOMB1...3) and controls the signalling channels,
- a switching unit (EPIC) which switches the message channels in the connected ISDN communication terminals (KE) and provides at least one PCM-oriented bus interface (PCM), and
- a microprocessor unit (MPE) which serially transmits the signal information and provides the microprocessor interface (PST).

4. ISDN communication system according to one of the preceding claims,
**characterized**
**in that** the transmission unit (OCTAT) is in a form such that eight ISDN-oriented ISDN communication terminals (KE-Up) acting on the basis of the time-division multiplex transmission method can be connected.

5. ISDN communication system according to one of the preceding claims,
**characterized**
**in that** the ISDN basic access units (ISAC1...4) are in a form such that ISDN communication terminals (KE-S) or ISDN lines in communication networks (ISDN-PSTN) can be connected to a standardized S₀ interface (S₀).

6. ISDN communication system according to one of the preceding claims,
**characterized**
**in that** the transmission unit (OCTAT), the peripheral controller (ELIC), the ISDN basic access units (ISAC1...4) and the extension access unit (EAE) are provided by integrated telecommunication circuits, and the extension unit (ASIC) is provided by a user-specifiable integrated circuit.

## Revendications

1. Système de communication RNIS (KS), comprenant
- une unité de transmission (OCTAT), laquelle présente
• plusieurs interfaces de transmission (Up) prévues chacune pour la connexion de terminaux de communication RNIS (KE-Up) et opérant selon le procédé de transmission TDM et
• une interface bus système (IOMB) orientée RNIS, interne au système de communication, par l'intermédiaire de laquelle des informations de messages et de signalisation destinées aux terminaux de communication connectés (KE-Up) sont transmises réunies sous la forme d'un flux sériel d'informations,
- une commande périphérique (ELIC) provoquant la commutation des terminaux de communication connectés (KE) et coordonnant les canaux de signalisation, laquelle présente
• au moins deux interfaces bus système (IOMB1, 2) orientées RNIS, internes au système de communication,
• une interface microprocesseur (PST) et
• une interface bus orientée PCM (PCM), la première interface bus système (IOMB1) étant reliée à l'interface bus système (IOMB) de l'unité de transmission (OCTAT),
- au maximum quatre unités de connexion de base RNIS (ISAC) pouvant être chacune reliées à un terminal de communication RNIS (KE-S) ou à une connexion RNIS d'un réseau de communication (RNIS-PSTN), lesquelles présentent
• chacune une interface de connexion de base RNIS (S₀) opérant en mode terminaux de communication ou en mode système de communication,
• une interface microprocesseur (PST) et
• une interface bus système interne (IOMB) orientée RNIS, les interfaces bus système (IOMB) des unités de connexion de base RNIS (ISAC) étant parallèles à la deuxième interface bus système (IOMB2) de la commande périphérique (ELIC),
- une unité complémentaire (ASIC) prévue pour générer resp. commander des cadences et des tonalités et pour commander les caractéristiques de puissance, ladite unité présentant une interface microprocesseur (PST) et une interface bus (PCM) orientée PCM et connectée à l'interface orientée PCM (PCM) de la commande périphérique (ELIC) et
- un système microprocesseur (MS) commandant resp. coordonnant la commutation, la signalisation et les caractéristiques de puissance du système de communication RNIS (KS),
• un microprocesseur (MP) représentant le système microprocesseur (MS) et une mémoire de lecture ainsi qu'une mémoire de lecture et d'écriture (ROM, RAM) étant, dans ledit système microprocesseur (MS), connectés à un système bus local (LB) constitué par des lignes d'adresse, de données et de commande et le système bus local (LB) étant relié en parallèle avec les interfaces microprocesseurs (PST) des unités de connexion de base RNIS et complémentaires (ASIC, ISAC) ainsi que de la commande périphérique (ELIC).

2. Système de communication RNIS selon la revendication 1, **caractérisé en ce que** la commande périphérique (ELIC) présente une troisième interface bus système interne (IOMB3) orientée RNIS, à laquelle peut optionnellement être connectée une unité de connexion d'extension (EAE) réalisant quatre connexions téléphoniques analogiques (a/b), ladite unité étant, à cet effet, pourvue d'une interface bus système interne (IOMB) orientée RNIS.

3. Système de communication RNIS selon la revendication 1 ou 2, **caractérisé en ce que** la commande périphérique (ELIC) est constituée par
- commande de canal de signalisation (DA) réalisant les interfaces bus système une internes (IOMB1 ... 3) orientées RNIS et commandant les canaux de signalisation,
- une unité de commutation (EPIC) commutant les canaux de messages des terminaux de communication RNIS (KE) connectés et réalisant au moins une interface bus orientée PCM (PCM) et
- une unité de microprocesseur (MPE) transmettant les informations de signalisation de façon sérielle et réalisant l'interface microprocesseur (PST).

4. Système de communication RNIS selon l'une des revendications précédentes, **caractérisé en ce que** l'unité de transmission (OCTAT) est configurée de manière que huit terminaux de communication RNIS (KE-Up) orientés RNIS et opérant selon le procédé de transmission TDM peuvent être connectés.

5. Système de communication RNIS selon l'une des revendications précédentes, **caractérisé en ce que** les unités de connexion de base RNIS (ISAC1 ... 4) sont configurées de manière que des terminaux de communication RNIS (KE-S) ou des connexions RNIS de réseaux de communication (RNIS-PSTN) avec une interface S₀ standardisée (S₀) peuvent être connectés.

6. Système de communication RNIS selon l'une des revendications précédentes, **caractérisé en ce que** l'unité de transmission (OCTAT), la commande périphérique (ELIC), les unités de connexion de base RNIS (ISAC1 ... 4) ainsi que l'unité de connexion d'extension (EAE) sont réalisées par des circuits de télécommunication intégrés et **en ce que** l'unité complémentaire (ASIC) est réalisée par un circuit intégré spécifiable selon l'utilisateur.
